# EUROPÄISCHE PATENTSCHRIFT

(11) **EP 3 460 288 B1**
(45) Veröffentlichungstag und Bekanntmachung des Hinweises auf die Patenterteilung: **21.10.2020**
(21) Anmeldenummer: 18195325.8
(22) Anmeldetag: 19.09.2018
(51) Int. Cl.: F16G 11/02

(54) **ENDVERBINDUNG FÜR DRAHTSEIL**
END CONNECTION FOR WIRE ROPE
RACCORD D'EXTRÉMITÉ POUR CÂBLE MÉTALLIQUE

(30) Priorität: 20.09.2017 AT 5017517 U
(43) Veröffentlichungstag der Anmeldung: 27.03.2019
(73) Patentinhaber: Teufelberger Seil Gesellschaft m.b.H., 4600 Wels (AT)
(72) Erfinder: KAISER, Gunter, 4600 Thalheim bei Wels (AT); TRAXL, Robert, 4802 Ebensee (AT)
(74) Vertreter: Sonn & Partner Patentanwälte

(56) Entgegenhaltungen:
- WO-A1-2015/170389
- GB-A- 405 784
- US-A- 1 643 150
- US-A- 1 732 581
- US-A- 3 174 273

## Beschreibung

Die Erfindung betrifft eine Endverbindungsvorrichtung für Drahtseile mit wendelförmig angeordneten Außenlitzen, welche zur Anordnung um einen Endabschnitt des Drahtseils als hülsenförmiger Körper mit einer inneren Mantelfläche und einer äußeren Mantelfläche ausgebildet ist, wobei zur Ausbildung eines zu einem Außenprofil des Drahtseils korrespondierenden Innenprofils des hülsenförmigen Körpers der hülsenförmige Körper an der inneren Mantelfläche sich in Längsrichtung der inneren Mantelfläche wendelförmig erstreckende Rillen aufweist, in welchen Teilabschnitte der Außenlitzen aufnehmbar sind.

Die Erfindung betrifft weiters eine Kombination der Endverbindungsvorrichtung mit einem darin aufzunehmenden Drahtseil mit wendelförmig angeordneten Außenlitzen.

Zudem betrifft die Erfindung ein Verfahren zur Herstellung der Endverbindungsvorrichtung.

Endverbindungsvorrichtungen für Seile bzw. Seil-Endverbindungen mit dem Ziel, an einem Seilende eine Verbindungsstelle bzw. Anschlussstelle zur Verbindung mit einem feststehenden oder mobilen Körper zu schaffen, sind aus dem Stand der Technik bekannt. Hierfür kann ein Metallfitting vorgesehen sein, dessen Innenkontur im Wesentlichen der Außenkontur eines Seils entspricht.

Die US 2016/0237615 A1 offenbart z.B. eine Endverbindungsvorrichtung für ein Verbundseil, welches Karbonfasern und wärmehärtendes Harz aufweist. Die Endverbindungsvorrichtung weist einen das Verbundseil umgebenden, hohlen metallischen Keilkörper und eine den Keilkörper umgebende metallische Hülse auf. Der Keilkörper ist kegelstumpfförmig aus zwei in einem Gießvorgang hergestellten Halbschalen gebildet, deren Innenflächen eine Kontur entsprechend der Außenkontur des Seils aufweisen. Zur Herstellung der Endverbindung werden die Halbschalen einander gegenüberliegend am Seilende positioniert und in die ebenfalls am Seilende positionierte metallische Hülse gezwungen, um hierdurch mit dem Seilende verpresst zu werden.

Nachteilig ist hierbei die mehrteilige Ausführung der Endverbindungsvorrichtung und der damit verbundene Kostenaufwand. Zudem ist die Herstellung einer Verbindung am Seilende mit einer derartigen mehrteiligen Endverbindungsvorrichtung umständlich.

Aus der Praxis sind auch einfacher konstruierte Endverbindungsvorrichtungen in Form von Stahlfittingen bzw. Stahlhülsen bekannt, die eine zylindrische, im Wesentlichen profillose Innenbohrung zur Aufnahme eines Seils bzw. Seilendes aufweisen. Ein Beispiel hierzu findet sich in der ÖNORM EN 13411-8 Ausgabe: 2011-12-01 - Endverbindungen für Drahtseile aus Stahldraht - Sicherheit - Teil 8: Stahlfittinge und Verpressungen.

Diese einfacher konstruierten Endverbindungsvorrichtungen weisen den Nachteil auf, dass die Stahlfittinge zur Herstellung einer Pressverbindung mit dem Seil in relativ hohem Ausmaß umgeformt werden müssen.

Die US 2,832,118 betrifft eine Hülse zur Anordnung an einem Ende eines spiralförmig gewundenen Seils. Die Hülse ist an einem Ende kegelstumpfförmig ausgebildet und weist eine Innenbohrung mit spiralförmig gebildeten Vertiefungen und Erhöhungen auf, die jenen am Seilende entsprechen. Nachdem die Hülse auf des Seilende aufgeschraubt wurde, wird diese mit dem Seilende verpresst.

Die US 2,939,732 offenbart eine Endverbindungsvorrichtung für Drahtseile, welche aus mehreren Komponenten aufgebaut ist. Auf das Seilende werden einzelne scheibenförmige und leicht verformbare Elemente aufgeschraubt, welche durch eine durch ein Gewinde aufgebrachte Längskraft in einen konischen Abschnitt der Endverbindungsvorrichtung gepresst und dabei verformt werden.

Die US 3,638,975 betrifft eine hülsenförmige Endverbindungsvorrichtung für Drahtseile, welche innenseitig parallel angeordnete Rillen aufweist und auf ein Seilende aufgepresst wird. Beim Verpressen der Endverbindungsvorrichtung auf das Seil werden die Litzen, welche im Seilverband spiralförmig angeordnet sind, parallel zur Seilachse ausgerichtet und gehen mit der Endverbindungsvorrichtung eine kraftschlüssige Verbindung Die US 1,643,150 betrifft auch eine Endverbindungsvorrichtung für Drahtseile.

Auch im Vergleich zu den letztgenannten Endverbindungsvorrichtungen besteht Bedarf an verbesserten Konstruktionen.

Es ist nun Aufgabe der Erfindung, eine Endverbindungsvorrichtung wie eingangs angegeben zu schaffen, die eine rasche und zuverlässige Herstellung einer Pressverbindung mit einem Seilende ermöglicht. Zudem soll die Endverbindungsvorrichtung eine Pressverbindung des hülsenförmigen Körpers mit dem Drahtseil ermöglichen, bei welcher eine möglichst geringe Umformung des hülsenförmigen Körpers und der Drähte des Drahtseils notwendig ist. Dabei soll die Flächenpressung vom hülsenförmigen Körper auf die Seilstruktur bzw. auf die Drähte des Seils im Vergleich zu Endverbindungsvorrichtungen mit einer zylindrischen, profillosen Bohrung geringer sein.

Es ist weiters Aufgabe der Erfindung, eine Kombination der Endverbindungsvorrichtung mit einem darin aufzunehmenden Drahtseil mit wendelförmig angeordneten Außenlitzen sowie ein Verfahren zur Herstellung der Endverbindungsvorrichtung zu schaffen.

Hierfür sieht die Erfindung eine Kombination der Endverbindungsvorrichtung mit einem darin aufzunehmenden Drahtseil wie in Anspruch 1 und ein Verfahren wie in Anspruch 7 definiert vor. Vorteilhafte Ausführungsformen und Weiterbildungen sind in den abhängigen Ansprüchen angegeben.

Es ist vorgesehen, dass der hülsenförmige Körper einstückig und als Hohlzylinder mit im Wesentlichen konstantem Außendurchmesser ausgebildet ist. Die Endverbindungsvorrichtung dient zur Anbringung an Drahtseilen, insbesondere der Anordnung um einen Endabschnitt eines Drahtseils, welches wendelförmig angeordnete Außenlitzen aufweist. Das Drahtseil ist bevorzugt ein geschlagenes Seil, welches mehrere Drähte, vorzugsweise aus Stahl, aufweist, die zu Litzen verdreht bzw. geschlagen sind, wobei die Litzen in wendelförmiger Anordnung zum Seil geschlagen sind. Die Endverbindungsvorrichtung ist als hülsenförmiger Körper mit einer inneren Mantelfläche und einer äußeren Mantelfläche ausgebildet. Der hülsenförmige Körper weist an seiner inneren Mantelfläche sich in Längsrichtung der inneren Mantelfläche wendelförmig erstreckende Rillen auf, sodass die innere Mantelfläche mit den Rillen ein Innenprofil des hülsenförmigen Körpers bildet. Dieses Innenprofil ist korrespondierend zu einem Außenprofil jenes Drahtseils ausgebildet, an welchem der hülsenförmige Körper montiert wird bzw. ist. Demnach sind die Rillen zur Aufnahme von Teilabschnitten der Außenlitzen ausgebildet, d.h. die Rillen sind ausgebildet, im noch unverpressten Zustand des hülsenförmigen Körpers mit dem Seil zumindest einen Teil der Außenfläche der Außenlitzen aufzunehmen. Im verpressten Zustand des hülsenförmigen Körpers mit dem Seil liegt die innere Mantelfläche des hülsenförmigen Körpers zumindest zum Teil an den Außenflächen der Außenlitzen an und greift in die Außenzwickel des Drahtseils (Zwicklräume zwischen den äußeren Bereichen der Außenlitzen) ein. Um den hülsenförmigen Körper rasch, kostengünstig und zuverlässig am Seilende befestigen zu können, ist der hülsenförmige Körper einstückig und als Hohlzylinder mit im Wesentlichen konstantem Außendurchmesser, mit den sich an der inneren Mantelfläche wendelförmig erstreckenden Rillen, ausgebildet. Dabei ist der Kernbohrungsdurchmesser des Hohlzylinders in Längsrichtung der inneren Mantelfläche ebenfalls im Wesentlichen konstant, sodass die aufzuwendende Kraft zur Verpressung des hülsenförmigen Körpers mit dem Seilende entlang dem hülsenförmigen Körper im Wesentlichen gleich groß ist.

Die Ausbildung des Innenprofils mit den Rillen, welche die Außenzwickel des Drahtseiles im Wesentlichen ausfüllen, ermöglicht im Vergleich zu Stahlfittingen nach der ÖNORM EN 13411-8 (Endverbindungen für Drahtseile aus Stahldraht - Sicherheit - Teil 8: Stahlfittinge und Verpressungen) eine Pressverbindung mit einem deutlich niedrigeren Verformungsgrad des hülsenförmigen Körpers. Im Gegensatz zu den konventionellen Stahlfittingen, die mit einer zylindrischen, im Wesentlichen profillosen Durchgangsbohrung versehen sind, hat das Material des mit dem Innenprofil versehenen hülsenförmigen Körpers während des Verpressens kleinere Fließwege, da die Innenkontur des hülsenförmigen Körpers bereits eine ähnliche Form wie die Außenkontur des Seils aufweist.

Die Endverbindungsvorrichtung weist zudem folgende Vorteile auf:
- Der geringere Verformungsgrad des hülsenförmigen Körpers ermöglicht im Vergleich zu konventionellen Stahlfittingen mit einer zylindrischen, im Wesentlichen profillosen Durchgangsbohrung eine schlankere Bauform des hülsenförmigen Körpers.
- Der geringere Verformungsgrad des hülsenförmigen Körpers reduziert den Druck, welcher vom gepressten hülsenförmigen Körper auf die Seilstruktur und somit auf die Drähte des Seils ausgeübt wird. Dadurch können mit der Endverbindungsvorrichtung Drahtseile mit einer Nennfestigkeit von 2160N/mm² und höher verpresst werden, welche mit herkömmlichen Stahlfittingen nur bedingt herstellbar sind. Grund hierfür ist, dass wegen der geringen Restduktilität der hochfesten Drähte diese häufig durch die hohe Flächenpressung bereits während des Verpressens brechen.
- Der geringere Verformungsgrad (und der geringere Verpressgrad) sowie die reduzierte Flächenpressung ermöglichen eine Kraftübertragung ohne Abminderung derselben, d.h. die Endverbindungsvorrichtung kann 100% der Mindestbruchkraft des Seiles übertragen. 100% der Mindestbruchkraft können zwar auch von gegossenen Seil-Endverbindungen übertragen werden, deren Außendurchmesser ist im Vergleich zum vorliegenden hülsenförmigen Körper jedoch signifikant größer. Die Endverbindungsvorrichtung erfüllt daher die Norm EN13411-8, gemäß welcher eine Abminderung der Kraftübertragung von bis zu 10% zulässig ist, und kann auch für Seile mit einer Nennfestigkeit von 2160 N/mm² und höher verwendet werden.

Die Endverbindungsvorrichtung weist Vorteile gegenüber bekannten Endverbindungsvorrichtungen mit einem hohlen Keilkörper und einer den Keilkörper umgebenden Hülse auf, mit welchen im Wesentlichen ohne eine durch Verpressen erzielte Umformung eine Keilverbindung hergestellt wird. Während Keilverbindungen in der Regel den Nachteil haben, dass bei schockartiger Entlastung ein Rückschlag entsteht, wodurch sich Keilendverbindungen lösen können, löst sich eine durch Verpressen hergestellte Verbindung mit der Endverbindungsvorrichtung gemäß der Erfindung i. a. nicht. Zudem wird durch den Keil der bekannten Endverbindungsvorrichtungen unter Zugbelastung eine Radialkraft erzeugt, welche proportional zur Längszugkraft ist. Da hochfeste Drähte empfindlich gegen radiale Belastung sind, kann sich das nachteilig auf die Haltbarkeit der Endverbindung auswirken. Bei der erfindungsgemäßen Ausführung wird die Radialkraft durch die Verpressung erzeugt und lässt sich gezielt, unabhängig von einer Längszugkraft, einstellen.

Gemäß einer bevorzugten Ausführungsform der Erfindung sind die sich wendelförmig erstreckenden Rillen im Querschnitt kreissegmentförmig ausgebildet. Durch die Kreissegmentform entspricht die Formgebung der Oberfläche der Rillen des hülsenförmigen Körpers im Wesentlichen der Formgebung der Oberfläche bzw. Außenfläche der Außenlitzen der Seils, sodass der hülsenförmige Körper mit besonders geringer Umformung mit dem Seil verpresst werden kann. Hierdurch stellen sich die aus dem geringeren Verformungsgrad, dem geringeren Verpressgrad und der reduzierten Flächenpressung hervorgehenden Vorteile noch deutlicher ein.

Die Endverbindungsvorrichtung kann besonders kostengünstig ausgebildet sein, wenn der Hohlzylinder aus Stahl hergestellt ist. Zudem ermöglicht ein Hohlzylinder aus Stahl die Herstellung einer dauerhaft stabilen und hoch beanspruchbaren Seil-Endverbindung.

Gemäß der Erfindung ist auch eine Kombination der vorstehend definierten Endverbindungsvorrichtung mit einem darin aufzunehmenden Drahtseil mit wendelförmig angeordneten Außenlitzen vorgesehen. Zudem ist gemäß der Erfindung eine Kombination der vorstehend definierten Endverbindungsvorrichtung mit einem darin bereits aufgenommenen Drahtseil mit wendelförmig angeordneten Außenlitzen vorgesehen. Die Endverbindungsvorrichtung ist daher zur Verbindung mit dem Drahtseil ausgebildet, d.h. das Drahtseil wird in der Endverbindungsvorrichtung aufgenommen. Insbesondere sind die Rillen des hülsenförmigen Körpers zu den Außenlitzen des Drahtseils korrespondierend ausgebildet, sodass der hülsenförmige Körper mit möglichst geringer Umformung mit dem Drahtseil verpresst werden kann.

Für eine besonders zuverlässige Verbindung des hülsenförmigen Körpers bzw. Hohlzylinders mit dem Drahtseil bei geringem Umformgrad ist es günstig, wenn die Steigung der sich wendelförmig erstreckenden Rillen in Längsrichtung des Hohlzylinders zwischen 80 % und 120 % der Schlaglänge, insbesondere gleich der Schlaglänge des darin aufzunehmenden bzw. aufgenommenen Drahtseils ist. Bekannter Weise kann die Schlaglänge eines Seils durch Verdrehung beeinflusst werden. Stimmt somit die Schlaglänge des aufzunehmenden Drahtseils nicht völlig mit den Rillen überein, kann in dem o.a. Ausmaß durch Verdrehen des Seils eine Deckung erzeugt werden. Dabei entspricht die Steigung der Rillen dem Längenausmaß in Längsrichtung der inneren Mantelfläche, welches eine Rille für eine vollständige Umrundung der inneren Mantelfläche des hülsenförmigen Körpers benötigt.

Die Verbindung des hülsenförmigen Körpers bzw. Hohlzylinders mit dem Drahtseil kann mit besonders geringem Umformgrad erfolgen, wenn die sich wendelförmig erstreckenden Rillen des Hohlzylinders im Querschnitt kreissegmentförmig ausgebildet sind und ein Verhältnis des Durchmessers der Außenlitzen des aufzunehmenden Drahtseils zum Durchmesser eines gedachten, die Kreissegmentform der Rillen fortsetzenden Kreises zwischen 1 und 1,1, vorzugsweise etwa 1,03 beträgt. Die Außenlitzen können somit einen im angegebenen Verhältnis größeren Durchmesser als die Rillen aufweisen.

Zudem kann die Verbindung des hülsenförmigen Körpers bzw. Hohlzylinders mit dem Drahtseil mit besonders geringem Umformgrad erfolgen, wenn das Verhältnis eines Hüllkreisdurchmessers des aufzunehmenden Drahtseils zu einem Hüllkreisdurchmesser der inneren Mantelfläche des Hohlzylinders zwischen 1 und 1,15, vorzugsweise etwa 1,09 beträgt. Der Hüllkreisdurchmesser des aufzunehmenden Drahtseils kann somit im angegebenen Verhältnis größer als der Hüllkreisdurchmesser der inneren Mantelfläche des Hohlzylinders sein. Dabei wird, ähnlich einer Schraubverbindung, die Endverbindungsvorrichtung durch Drehen auf das Seil aufgeschraubt.

Weiters kann die Verbindung des hülsenförmigen Körpers bzw. Hohlzylinders mit dem Drahtseil mit besonders geringem Umformgrad erfolgen, wenn das Verhältnis eines Teilkreisdurchmessers der Außenlitzen des aufzunehmenden Drahtseils zu einem Kernbohrungsdurchmesser der inneren Mantelfläche des Hohlzylinders zwischen 1 und 1,10, vorzugsweise etwa 1,02 beträgt. Auch hier wird, ähnlich einer Schraubverbindung, die Endverbindungsvorrichtung durch Drehen auf das Seil aufgeschraubt.

Gemäß der Erfindung ist zudem ein Verfahren zur Herstellung einer Endverbindungsvorrichtung wie angegeben vorgesehen, welches dadurch gekennzeichnet ist, dass der Hohlzylinder generativ oder durch Gießen oder spanabhebend hergestellt wird. Dabei wird unter einem generativen Fertigungsverfahren, welches auch als additives Fertigungsverfahren oder als Rapid Prototyping bezeichnet wird, ein dem Fachmann grundsätzlich bekanntes Verfahren zum computergestützten schichtweisen Aufbau einer Struktur aus einem fließfähigen bzw. rieselfähigen Ausgangsmaterial, wie Pulvermaterial, verstanden. Demgegenüber erfordert die Herstellung der Endverbindungsvorrichtung in einem Gießvorgang eine entsprechend ausgebildete Gießform. Der Bereich der spanabhebenden Fertigungsverfahren umfasst unter anderem Dreh- und Fräsbearbeitungen. Der Hohlzylinder bzw. der hülsenförmige Körper kann somit kostengünstig mit an sich bekannten Verfahren hergestellt werden.

Insbesondere kann vorgesehen sein, dass für die generative Herstellung des Hohlzylinders pulverförmiges Metall, insbesondere Stahl, schichtweise angeordnet, in den den Hohlzylinder bildenden Bereichen, vorzugsweise durch einen Laserstrahl oder Elektronenstrahl aufgeschmolzen und durch Abkühlen erhärtet wird, um den Hohlzylinder aus fest ausgebildeten, miteinander verbundenen Schichten zu formen.

Wie an sich aus Wikipedia bekannt, wird beim selektiven Laserschmelzen der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis alle Schichten umgeschmolzen sind. Das fertige Bauteil wird vom überschüssigen Pulver gereinigt, nach Bedarf bearbeitet oder sofort verwendet.

Beim selektiven Elektronenstrahlschmelzen wird, wie an sich aus Wikipedia bekannt, durch einen Elektronenstrahl als Energiequelle ein Metallpulver gezielt aufgeschmolzen, wodurch kompakte Bauteile nahezu beliebiger Geometrie direkt aus den Konstruktionsdaten hergestellt werden können. Hierzu wird, ähnlich dem Selektiven Laserschmelzen, abwechselnd eine Pulverlage mit einer Rakel auf die vorherige aufgebracht und mittels Elektronenstrahl bestrahlt. Auf diese Weise wird das gewünschte Bauteil schichtweise generiert.

Ein alternative Ausführungsform des Verfahrens kann vorsehen, dass für die Herstellung des Hohlzylinders durch Gießen flüssiges Metall, insbesondere Stahl, in eine Gießform mit einer zylindrischen Außenwand und einem innerhalb der Außenwand angeordneten Kern eingebracht wird, wobei der Kern ein zum Innenprofil des herzustellenden Hohlzylinders korrespondierendes Außenprofil aufweist und der Hohlzylinder nach Erstarren des eingebrachten Metalls aus der Gießform entnommen wird.

Gemäß einer weiteren alternativen Ausführungsform des Verfahrens können für die spanabhebende Herstellung des Hohlzylinders in einen Hohlzylinder mit im Querschnitt kreisförmiger innerer Mantelfläche mittels eines spanabhebenden Werkzeugs sich in Längsrichtung der inneren Mantelfläche wendelförmig erstreckende Rillen eingebracht werden.

Die Erfindung wird im Folgenden anhand von bevorzugten, nicht einschränkenden Ausführungsbeispielen unter Bezugnahme auf die Zeichnung noch weiter erläutert. Es zeigen:
Fig. 1 eine Endverbindungsvorrichtung gemäß der Erfindung in einer Schnittansicht in Längsrichtung der Endverbindungsvorrichtung;
Fig. 2 die Endverbindungsvorrichtung aus Fig. 1 in einer durch eine Schnittlinie A-A gemäß Fig. 1 generierten Querschnittsansicht, in vergrößertem Maßstab;
Fig. 3 ein Drahtseil, welches zur Verbindung mit der Endverbindungsvorrichtung aus Fig. 1 vorgesehen ist, in einer Seitenansicht;
Fig. 4 das Drahtseil aus Fig. 3 in einer Querschnittsansicht; und
Fig. 5 die Endverbindungsvorrichtung aus Fig. 1 in einem am Drahtseil aus Fig. 3 montierten Zustand.

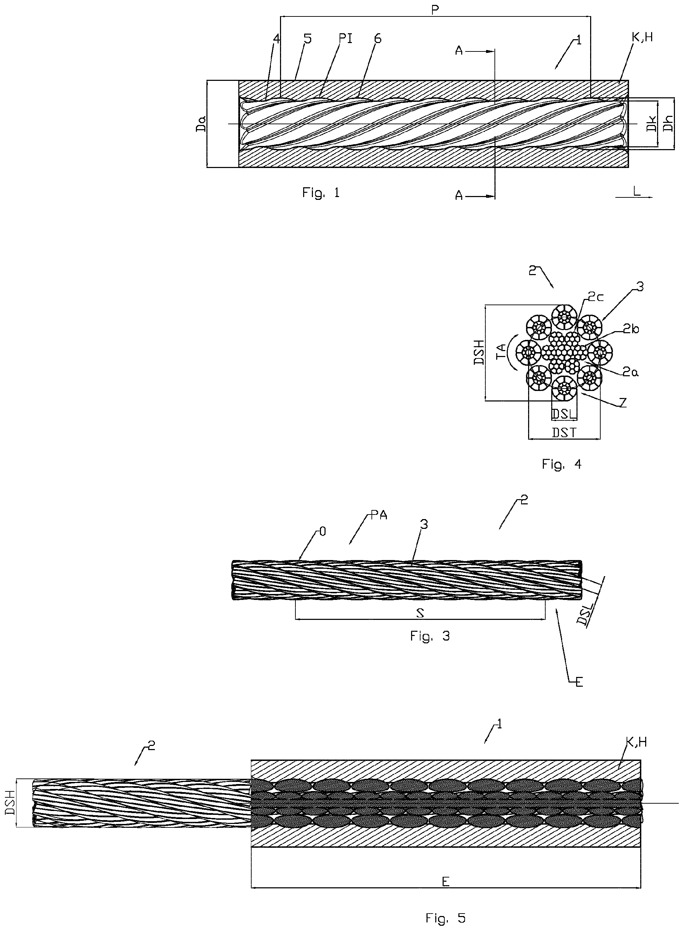

Fig. 1 zeigt eine Endverbindungsvorrichtung 1 für Drahtseile 2 mit wendelförmig angeordneten Außenlitzen 3. Die Endverbindungsvorrichtung 1 ist zur Anordnung um einen Endabschnitt E (siehe Fig. 5) des Drahtseils 2 als hülsenförmiger Körper K mit einer inneren Mantelfläche 4 und einer äußeren Mantelfläche 5 ausgebildet. Zur Ausbildung eines zu einem Außenprofil PA des Drahtseils 2 (siehe Fig. 3) korrespondierenden Innenprofils PI des hülsenförmigen Körpers K weist der hülsenförmige Körper K an der inneren Mantelfläche 4 sich in Längsrichtung L der inneren Mantelfläche 4 wendelförmig erstreckende Rillen 6 auf, in welchen Teilabschnitte TA der Außenlitzen 3 (siehe Fig. 4) aufnehmbar sind. Der hülsenförmige Körper K ist einstückig und als Hohlzylinder H mit im Wesentlichen konstantem Außendurchmesser Da ausgebildet.

Die Endverbindungsvorrichtung 1 wird um einen Endabschnitt E eines Drahtseils 2 angeordnet und durch Verpressen mit dem Endabschnitt E am Drahtseil 2 befestigt. Das Drahtseil 2 kann einen Kern 2a mit einem oder mehreren Kerndrähten 2b und/oder Kernlitzen 2c aufweisen, um welche(n) zumindest eine Lage von verdrillten bzw. wendelförmig angeordneten Litzen mit an der Seiloberfläche O liegenden Außenlitzen 3 geschlagen ist (siehe Fig. 3 und 4). Das Innenprofil PI des hülsenförmigen Körpers K ist korrespondierend zum Außenprofil PA des Drahtseils 2 ausgebildet. Hierfür erstrecken sich die Rillen 6 an der inneren Mantelfläche 4 des hülsenförmigen Körpers K so wie die Außenlitzen 3 des Drahtseils 2 wendelförmig in Längsrichtung L der inneren Mantelfläche 4 bzw. in Längsrichtung L der Endverbindungsvorrichtung 1. Zudem weist die Oberfläche der Rillen 6 eine zur Oberfläche der Außenlitzen 3 möglichst ähnliche Form auf, sodass mittels des Verpressens die Oberfläche der Rillen 6 bei möglichst geringer Umformung des hülsenförmigen Körpers K bzw. der Rillen 6 an der Oberfläche der Außenlitzen 3 zu liegen kommt. Im in Fig. 1 gezeigten Ausführungsbeispiel sind die sich wendelförmig erstreckenden Rillen 6 sowie die Außenlitzen 3 des Drahtseils 2 (siehe Fig. 3 und 4) im Querschnitt kreissegmentförmig ausgebildet. Im verpressten Zustand des hülsenförmigen Körpers K mit dem Drahtseil 2 greift die innere Mantelfläche 4 des hülsenförmigen Körpers K in die Außenzwickel Z (Fig. 4) des Drahtseils 2 ein.

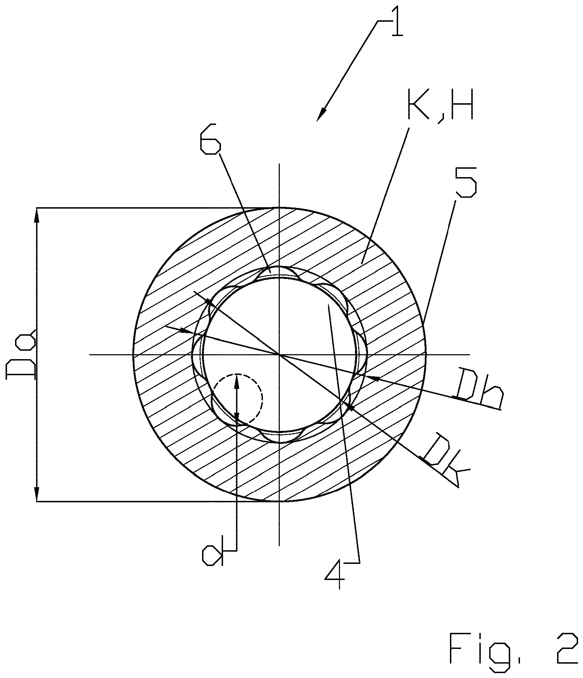

Fig. 2 zeigt die Endverbindungsvorrichtung 1 in einer Querschnittsansicht, zur deutlicheren Darstellung in einem vergrößerten Maßstab. In Fig. 2 ist insbesondere die einstückige, d.h. entlang der Längsrichtung L der Endverbindungsvorrichtung 1 (siehe Fig. 1) ungeteilte Ausbildung des hülsenförmigen Körpers K als Hohlzylinder H mit im Wesentlichen konstantem Außendurchmesser Da ersichtlich. Der hülsenförmige Körper K bzw. Hohlzylinder H weist einen Kernbohrungsdurchmeser Dk der inneren Mantelfläche 4 des Hohlzylinders H, einen Hüllkreisdurchmesser Dh der inneren Mantelfläche 4 und kreissegmentförmige Rillen 6 auf, mit einem Durchmesser d eines gedachten, die Kreissegmentform der Rillen 6 fortsetzenden Kreises.

In Fig. 5 ist die Endverbindungsvorrichtung 1 in einem am Drahtseil 2 montierten Zustand dargestellt, d.h. die Endverbindungsvorrichtung 1 ist an einem Endabschnitt E des Drahtseils 2, welches wendelförmig angeordnete Außenlitzen 3 aufweist, angeordnet. Die Endverbindungsvorrichtung 1 ist vorzugsweise so ausgebildet, dass die in Fig. 1 ersichtliche Steigung P der sich wendelförmig erstreckenden Rillen 6 in Längsrichtung L des Hohlzylinders H zwischen 80 % und 120 % der Schlaglänge S, insbesondere gleich der Schlaglänge S des darin aufzunehmenden Drahtseils 2 beträgt. Zudem sind gemäß Fig. 2 die sich wendelförmig erstreckenden Rillen 6 des Hohlzylinders H im Querschnitt vorzugsweise kreissegmentförmig ausgebildet, und ein Verhältnis des Durchmessers DSL (Fig. 3) der Außenlitzen 3 des aufzunehmenden Drahtseils 2 zum Durchmesser d eines gedachten, die Kreissegmentform der Rillen 6 fortsetzenden Kreises beträgt günstiger Weise zwischen 1 und 1,1, vorzugsweise etwa 1,03. Das Verhältnis des Hüllkreisdurchmessers DSH (Fig. 4) des aufzunehmenden Drahtseils 2 zum Hüllkreisdurchmesser Dh der inneren Mantelfläche 4 des Hohlzylinders H beträgt beispielsweise zwischen 1 und 1,15, vorzugsweise etwa 1,09. Das Verhältnis des Teilkreisdurchmessers DST (Fig. 4) der Außenlitzen 3 des aufzunehmenden Drahtseils 2 zum Kernbohrungsdurchmesser Dk der inneren Mantelfläche 4 des Hohlzylinders H beträgt beispielsweise zwischen 1 und 1,10, vorzugsweise etwa 1,02.

Die Endverbindungsvorrichtung 1 kann mit geringem Verformungsgrad am Endabschnitt E des Drahtseils 2 montiert werden, wodurch die Endverbindungsvorrichtung 1 eine schlankere Bauform als ein konventioneller Stahlfitting, der mit einer zylindrischen, im Wesentlichen profillosen Durchgangsbohrung versehen ist, aufweisen kann. Die folgende Tabelle zeigt einen Vergleich des Verpressgrads einer generativ gefertigten Endverbindungsvorrichtung 1 mit einem Verpressgrad eines solchen konventionellen Stahlfittings zur Anordnung in Verbindung mit einem typischen Drahtseil.

| **Konv. Stahlfitting** | | | |
|---|---|---|---|
| **Seil** | **Außendurchmesser** | | **Verpressgrad** |
| 1100-8xK17S-EPIWRC (K)-B-sZ | **Vor dem Verpressen** | **23,10 mm** | 1,13 |
| | **Nach dem Verpressen** | **20,40 mm** | |

| **Endverbindungsvorrichtung gemäß Erfindung** | | | |
|---|---|---|---|
| **Seil** | **Außendurchmesser** | | **Verpressgrad** |
| 1100-8xK17S-EPIWRC(K)-B-sZ | **Vor dem Verpressen** | **20mm** | 1, 06 |
| | **Nach dem Verpressen** | **18,75mm** | |

Dabei ist der Verpressgrad definiert als V = Außendurchmesser Da vor Verpressung / Außendurchmesser Da nach Verpressung.

Die folgende Tabelle zeigt einen Vergleich des Umformgrads einer generativ gefertigten Endverbindungsvorrichtung 1 mit einem Umformgrad eines konventionellen Stahlfittings zur Anordnung in Verbindung mit einem typischen Drahtseil.

| **Konv. Stahlfitting** | | **Endverbindungsvorrichtung gemäß Erfindung** | |
|---|---|---|---|
| **Seil** | **Umformgrad** | **Seil** | **Umformgrad** |
| 1100-8xK17S-EPIWRC(K)-B-sZ | 1,28 | 1100-8xK17S-EPIWRC (K) -B-sZ | 1, 14 |

Dabei ist der Umformgrad definiert als U = Querschnittsfläche berechnet über Außendurchmesser Da vor Verpressung / Querschnittsfläche berechnet über Außendurchmesser Da nach Verpressung.

Aus der folgenden Tabelle geht ein Vergleich des Strangzugergebnisses (statische Prüfung) für eine generativ gefertigte Endverbindungsvorrichtung 1 und für einen konventionellen Stahlfitting hervor.

| **Konv. Stahlfitting** | | **Endverbindungsvorrichtung gemäß Erfindung** | |
|---|---|---|---|
| **Seil** | **Erreichte Strangzugkraft** | **Seil** | **Erreichte Strangzugkraft** |
| 1100-8xK17S-EPIWRC(K)-B-sZ | 90% der MBK | 1100-8xK17S-EPIWRC(K)-B-sZ | 119,3% der MBK³ |
| | 75% der SBK | | 98,6% der SBK⁴ |

- MBK: Mindestbruchkraft
- SBK: Strangbruchkraft (tatsächliche Bruchkraft des Seils)

## Patentansprüche

1. Kombination einer Endverbindungsvorrichtung (1) für Drahtseile (2) mit einem darin aufzunehmenden Drahtseil (2) mit wendelförmig angeordneten Außenlitzen (3), welche Endverbindungsvorrichtung (1) zur Anordnung um einen Endabschnitt (E) des Drahtseils (2) als einstückiger hülsenförmiger Körper (K) mit einer inneren Mantelfläche (4) und einer äußeren Mantelfläche (5) ausgebildet ist, wobei zur Ausbildung eines zu einem Außenprofil (PA) des Drahtseils (2) korrespondierenden Innenprofils (PI) des hülsenförmigen Körpers (K) der hülsenförmige Körper (K) an der inneren Mantelfläche (4) sich in Längsrichtung (L) der inneren Mantelfläche (4) wendelförmig erstreckende Rillen (6) aufweist, in welchen Teilabschnitte (TA) der Außenlitzen (3) aufnehmbar sind, **dadurch gekennzeichnet, dass** der hülsenförmige Körper (K) als Hohlzylinder (H) mit im Wesentlichen konstantem Außendurchmesser (Da) ausgebildet ist und dass das Verhältnis eines Hüllkreisdurchmessers (DSH) des aufzunehmenden Drahtseils (2) zu einem Hüllkreisdurchmesser (Dh) der inneren Mantelfläche (4) des Hohlzylinders (H) zwischen 1 und 1,15, vorzugsweise etwa 1,09 beträgt.

2. Kombination nach Anspruch 1, **dadurch gekennzeichnet, dass** die sich wendelförmig erstreckenden Rillen (6) im Querschnitt kreissegmentförmig ausgebildet sind.

3. Kombination nach Anspruch 1 oder 2, **dadurch gekennzeichnet, dass** der Hohlzylinder (H) aus Stahl hergestellt ist.

4. Kombination nach einem der Ansprüche 1 bis 3, **dadurch gekennzeichnet, dass** die Steigung (P) der sich wendelförmig erstreckenden Rillen (6) in Längsrichtung (L) des Hohlzylinders (H) zwischen 80 % und 120 % der Schlaglänge (S), insbesondere gleich der Schlaglänge (S) des darin aufzunehmenden Drahtseils (2) ist.

5. Kombination nach einem der Ansprüche 1 bis 4, **dadurch gekennzeichnet, dass** die sich wendelförmig erstreckenden Rillen (6) des Hohlzylinders (H) im Querschnitt kreissegmentförmig ausgebildet sind und ein Verhältnis des Durchmessers (DSL) der Außenlitzen (3) des aufzunehmenden Drahtseils (2) zum Durchmesser (d) eines gedachten, die Kreissegmentform der Rillen (6) fortsetzenden Kreises zwischen 1 und 1,1, vorzugsweise etwa 1,03 beträgt.

6. Kombination nach einem der Ansprüche 1 bis 5, **dadurch gekennzeichnet, dass** das Verhältnis eines Teilkreisdurchmessers (DST) der Außenlitzen (3) des aufzunehmenden Drahtseils (2) zu einem Kernbohrungsdurchmesser (Dk) der inneren Mantelfläche (4) des Hohlzylinders (H) zwischen 1 und 1,10, vorzugsweise etwa 1,02 beträgt.

7. Verfahren zur Herstellung einer Endverbindungsvorrichtung (1) der Kombination nach einem der Ansprüche 1 bis 6, **dadurch gekennzeichnet, dass** der Hohlzylinder (H) generativ hergestellt wird.

8. Verfahren nach Anspruch 7, **dadurch gekennzeichnet, dass** für die generative Herstellung des Hohlzylinders (H) pulverförmiges Metall, insbesondere Stahl, schichtweise angeordnet, in den den Hohlzylinder (H) bildenden Bereichen, vorzugsweise durch einen Laserstrahl oder Elektronenstrahl aufgeschmolzen und durch Abkühlen erhärtet wird, um den Hohlzylinder (H) aus fest ausgebildeten, miteinander verbundenen Schichten zu formen.

## Claims

1. Combination of an end connection device (1) for wire ropes (2) with a wire rope (2) to be received therein which has helically arranged outer strands (3), which end connection device (1) is designed as a one-piece sleeve-shaped body (K) having an inner lateral surface (4) and an outer lateral surface (5) for arrangement around an end portion (E) of the wire rope (2), the sleeve-shaped body (K) having, on the inner lateral surface (4), grooves (6) which extend helically in the longitudinal direction (L) of the inner lateral surface (4) in order to form an inner profile (PI) of the sleeve-shaped body (K) which corresponds to an outer profile (PA) of the wire rope (2), in which grooves portions (TA) of the outer strands (3) can be received, **characterised in that** the sleeve-shaped body (K) is designed as a hollow cylinder (H) having a substantially constant outer diameter (Da) and **in that** the ratio of an enveloping circle diameter (DSH) of the wire rope (2) to be received with respect to an enveloping circle diameter (Dh) of the inner lateral surface (4) of the hollow cylinder (H) is between 1 and 1.15, preferably approximately 1.09.

2. Combination according to claim 1, **characterised in that** the helically extending grooves (6) are in the shape of circular segments in cross section.

3. Combination according to either claim 1 or claim 2, **characterised in that** the hollow cylinder (H) is made from steel.

4. Combination according to any of claims 1 to 3, **characterised in that** the pitch (P) of the helically extending grooves (6) in the longitudinal direction (L) of the hollow cylinder (H) is between 80% and 120% of the lay length (S), in particular is equal to the lay length (S) of the wire rope (2) to be received therein.

5. Combination according to any of claims 1 to 4, **characterised in that** the helically extending grooves (6) of the hollow cylinder (H) are in the shape of circular segments in cross section and a ratio of the diameter (DSL) of the outer strands (3) of the wire rope (2) to be received with respect to the diameter (d) of an imaginary circle which continues the circular segment shape of the grooves (6) is between 1 and 1.1, preferably approximately 1.03.

6. Combination according to any of claims 1 to 5, **characterised in that** the ratio of a pitch circle diameter (DST) of the outer strands (3) of the wire rope (2) to be received with respect to a tap hole diameter (Dk) of the inner lateral surface (4) of the hollow cylinder (H) is between 1 and 1.10, preferably approximately 1.02.

7. Method for producing an end connection device (1) of the combination according to any of claims 1 to 6, **characterised in that** the hollow cylinder (H) is additively manufactured.

8. Method according to claim 7, **characterised in that**, for the additive manufacturing of the hollow cylinder (H), powdered metal, in particular steel, arranged in layers, is melted in the regions forming the hollow cylinder (H), preferably by a laser beam or electron beam, and hardened by cooling, in order to form the hollow cylinder (H) from rigid, interconnected layers.

## Revendications

1. Combinaison d'un dispositif de raccord d'extrémité (1) pour câbles métalliques (2) comportant un câble métallique (2) devant être contenu dans celui-ci avec des torons extérieurs (3) disposés en forme hélicoïdale, ledit dispositif de raccord d'extrémité (1) étant conçu pour la disposition autour d'un segment terminal (E) du câble métallique (2) en tant que corps monobloc en forme de manchon (K) pourvu d'une surface de gaine interne (4) et d'une surface de gaine externe (5), le corps en forme de manchon (K) comportant, sur la surface de gaine interne (4), des rainures (6) s'étendant hélicoïdalement dans le sens longitudinal (L) de la surface de gaine interne (4), dans lesquelles peuvent être accueillis des segments partiels (TA) des torons extérieurs (3), pour former un profil interne (PI) du corps en forme de manchon (K) correspondant à un profil externe (PA) du câble métallique (2), **caractérisée en ce que** le corps en forme de manchon (K) est conçu sous la forme d'un cylindre creux (H) ayant un diamètre externe (Da) sensiblement constant et **en ce que** le rapport d'un diamètre circulaire d'enveloppement (DSH) du câble métallique (2) devant être accueilli sur un diamètre circulaire d'enveloppement (Dh) de la surface de gaine interne (4) du cylindre creux (H) est compris entre 1 et 1,15, est de préférence d'environ 1,09.

2. Combinaison selon la revendication 1, **caractérisée en ce que** les rainures (6) s'étendant hélicoïdalement sont conçues sous forme de segment circulaire en section transversale.

3. Combinaison selon la revendication 1 ou 2, **caractérisée en ce que** le cylindre creux (H) est fabriqué à partir d'acier.

4. Combinaison selon l'une des revendications 1 à 3, **caractérisée en ce que** la pente (P) des rainures (6) s'étendant hélicoïdalement dans le sens longitudinal (L) du cylindre creux (H) est comprise entre 80 % et 120 % du pas de câblage (S), en particulier est égale au pas de câblage (S) du câble métallique (2) devant être accueilli dans celui-ci.

5. Combinaison selon l'une des revendications 1 à 4, **caractérisée** en ce les rainures (6) du cylindre creux (H) s'étendant hélicoïdalement sont conçues sous forme de segment circulaire en section transversale et un rapport du diamètre (DSL) des torons extérieurs (3) du câble métallique (2) devant être accueilli sur le diamètre (d) d'un cercle fictif, prolongeant la forme de segment circulaire des rainures (6), est compris entre 1 et 1,1, est de préférence environ 1,03.

6. Combinaison selon l'une des revendications 1 à 5, **caractérisée en ce que** le rapport d'un diamètre circulaire partiel (DST) des torons extérieurs (3) du câble métallique (2) devant être accueilli sur un diamètre de perforation centrale (Dk) de la surface de gaine interne (4) du cylindre creux (H) est compris entre 1 et 1,10, est de préférence environ 1,02.

7. Procédé de fabrication d'un dispositif de raccord d'extrémité (1) de la combinaison selon l'une des revendications 1 à 6, **caractérisé en ce que** le cylindre creux (H) est créé de manière générative.

8. Procédé selon la revendication 7, **caractérisé en ce que**, pour la fabrication générative du cylindre creux (H), du métal pulvérulent, en particulier de l'acier, disposé par couche, est fondu dans les zones formant le cylindre creux (H), de préférence par un faisceau laser ou un faisceau électronique, et est durci par refroidissement pour former le cylindre creux (H) à partir de couches liées les unes avec les autres conçues sous forme solide.
